# EUROPEAN PATENT APPLICATION

(11) **EP 1 728 709 A2**
(43) Date of publication of application: **06.12.2006**
(21) Application number: 06076150.9
(22) Date of filing: 02.06.2006
(51) Int. Cl.: B62D 53/06, B62D 25/18, B60P 1/34, B62D 13/00, B60P 1/64

(54) **Semi-trailer chassis**

(30) Priority: 03.06.2005 NL 1029188
(71) Applicant: D-TEC Containertrailers B.V., 4041 CP Kesteren (NL)
(72) Inventor: van Harn, Jan Diederik, 3925 XB Scherpenzeel (NL)
(74) Representative: van Loon, C.J.J.

(57) **Abstract**

A chassis (1), provided with a loading surface (2), at least one set of wheels (3) and a pulling vehicle coupling (4) for connection to a pulling vehicle, wherein on the front (5) and rear (6) side of the chassis mutually complementary chassis coupling means (7,8) are provided for rigid coupling about an upright axle to a complementary coupling means of another chassis, while the at least one set of wheels (3) is of force-steered design or is designed to be adjustable in driving direction between several positions relative to the pulling vehicle coupling (4). When the chassis is independently coupled, or connected to a pulling vehicle while rigidly coupled in random order to a similar chassis, it is preferred that through adjustment of the set of wheels (3) and the pulling vehicle coupling (4) relative to each other, the weight distribution can be set.

## Description

The invention relates to a chassis for a semi-trailer or trailer proper.

In the world of transport, there is a great need among haulers for chassis that can be deployed in a highly flexible manner for transporting load, so that they can deploy their material and manpower as efficiently as possible for transporting load as quickly as possible and at the lowest possible costs, responsibly, within the legal boundaries.

When, for instance, transport of containers is involved, as a rule, the load mostly consists of ISO standardized, 20', 30', 40' or 45' feet sea containers. Many haulers drive for regular customers such as transhipment companies or shipping companies. However, haulers do not want to be bound and want to have the option to also drive for other customers. Some clients always utilize the same size container, other clients use different sizes containers randomly. There are many clients who load relatively heavy load into a 20' container. The hauler then shuttles back and forth between different transfer stations. The hauler then likes to have the possibility of transporting a mixture of heavy and light, for instance empty, 20' containers. With regard to sizes, it is possible to transport two 20' containers with one vehicle with one driver. Most optimally, the same vehicle can also transport 30', 40' and 45' containers.

As a solution hereto, in practice, a divisible chassis is utilized with which, on the front chassis as well as on the rear chassis, a 20' container can be placed while the chassis can be rigidly coupled to form a composite semi-trailer. On the composite trailer, a 30', 40' or 45' container can be placed. The chassis can, each separately, be coupled to a pulling vehicle.

However, a drawback of the known chassis is that the mutual position of the chassis which can be coupled together cannot be exchanged. When, for instance, at a loading dock, on the rear chassis, the container has been filled, but when the container on the front chassis is still empty, the distribution of the axle loads is very bad. Here, the pressure on the pulling axle of the pulling vehicle is insufficient.

When, somewhere, a front chassis is loaded and, in the vicinity, there is a pulling vehicle with a similar front chassis, this pulling vehicle with front chassis cannot take along the other front chassis.

It is known per se from NL 1018651 to compose a vehicle from a front and rear chassis, the order of which can be exchanged. However, with this chassis, the manner of coupling is highly complicated so that, in practice, exchanging the order is not carried out. In addition, the manoeuvrability of the chassis in coupled condition is insufficient, so that with this design, in practice, only a combination of very short chassis can meet the relatively narrow maximum bend radius of the path to negotiate, laid down in the regulations according to EU Directive 96/53 (Sept. 17, 1996). In this Directive, in Art. 1.5, it is laid down, - in simple terms - that a motor vehicle or combination in motion must be able to turn in a swept circle with an outer radius of 12.50 meter and an inner radius of 5.30 meters. Further, with this chassis, the distribution of the axle load cannot be set.

It is also known to couple a so-called container truck, i.e. a truck with a loading surface for a 20' container or a fixed superstructure, to a trailer with a loading surface on which a 20' container can be taken along or which is provided with a fixed superstructure. Such a combination is not suitable for transport of long containers of, for instance, 30', 40', or 45'. Also, the weight distribution is not optimal, for instance when combining an empty container with a loaded trailer.

The object of the invention is a chassis with which, while maintaining the advantages of the known chassis, the flexibility and the driving properties can be improved even further.

To that end, the invention provides a chassis provided with a loading surface, at least one set of wheels and a pulling vehicle coupling for connection to a pulling vehicle, while on the front and rear side of the chassis, mutually complementary chassis coupling means are provided for rigid coupling about an upright axle to a complementary coupling means of another chassis, the at least one set of wheels being of force-steered design or being designed to be adjustable between several positions in driving direction with respect to the pulling vehicle coupling.

Through the use of force-steered axles, the minimum bend radius of the chassis in coupled condition can be increased considerably. Without the use of force-steered axles, or without sliding the axles towards each other, the trailer is in control of the truck and it is no longer drivable. What is achieved with force-steered axles is, that the chassis is drivable and, by setting the steering angle properly, the combination can remain within the prescribed minimum and maximum radius. By designing the at least one set of wheels to be adjustable between several position in driving direction with respect to the pulling vehicle coupling, when the chassis are in coupled condition, the sets of wheels can be brought closer together and further forward with respect to the rear side of the hindmost chassis. By sliding the axles towards each other, the chassis becomes drivable. By positioning the axles at the correct position, more forward relative to the rear side, the combination can remain within the prescribed minimum and maximum radius. With this too, the minimum bend radius of the chassis in coupled condition can be increased considerably. Here, it is preferred that the at least one set of wheels is adjustable with respect to the pulling vehicle coupling between a first position, situated closer to the rear side of the loading surface and a second position, situated closer to the front side of the loading surface.

Preferably, further means are provided for increasing the manoeuvrability, when coupled to another chassis. This can for instance be carried out through:
- tie rods of the set of wheels and/or;
- axles of the set of wheels being liftable with respect to the loading surface.

Preferably, both when the chassis is connected independently to a pulling vehicle and when the chassis is connected to a pulling vehicle while rigidly coupled in random order to a similar chassis, the weight distribution can be set by adjusting the set of wheels and the pulling vehicle coupling relative to each other. Through adjustment of the weight distribution, the ratio between the force applied via the pulling vehicle coupling to the pulling vehicle, and the force applied via the set of wheels to the road can be set. Through this combination of features, the invention provides a chassis with the following main properties.

The chassis can for instance transport a 20' container and can then be placed by the rear side against a loading dock in a manner such that the 20' container can be loaded and unloaded from the loading dock. The chassis can be coupled to another chassis by a complementary chassis coupling. When the chassis is coupled to a similar chassis, one rigid chassis can be formed, with which, for instance, two 20' containers or one 40' container or one 45' container can be transported. With a 40' or 45' container, the vehicle can be placed by the rear side against a loading dock, so that the containers can be loaded and unloaded from the loading dock.

The order of coupling is undetermined. When two similar chassis are rigidly coupled, each chassis can be coupled in front of or behind the other chassis.

The coupled chassis can be loaded flexibly to such an extent that even with the most diverse container weights, for instance 20' full and 20' empty, a good weight distribution across the axles and the pulling vehicle coupling can be achieved.

The set of wheels and the pulling vehicle coupling can preferably be adjusted relative to each other with one or more of the following possibilities:
- a pulling vehicle coupling adjustable in driving direction with respect to the loading surface, for instance a king ping which is slidable between several positions, or a slidable draw bar with draw bar eye;
- axles of the set of wheels slidable in driving direction with respect to the loading surface.

In an elegant manner, the chassis comprises two parts adjustable relative to each other in driving direction, formed by a loading part comprising the loading surface and the pulling vehicle coupling, and an axle set bearing the at least one set of wheels. In this manner, a relatively simple, compact construction can be realized which can be easily adjusted. Loading part and axle set are directly coupled, there is no intermediate part present.

Through the provision of a buffer beam which is adjustable in driving direction relative to the loading part and relative to the axle set, more freedom is obtained for positioning the buffer beam on the rear side of the load.

As an alternative to a chassis with an axle set which is adjustable with respect to the loading part, the axles of the axle set can be of force-steered design. Here, driving the force-steered axles, preferably in coupled condition to another chassis, depends on the order of coupling.

By designing the chassis coupling means such that, in coupled condition, they are pivotal about a horizontal axle transverse to the driving direction, the coupling means can be designed to be slimmer.

The front and rear chassis coupling means can be provided on the axle set, in particular on the front and rear side of the axle set. Preferably, the chassis coupling means described in this context are designed to be of independently coupling design, i.e. designed such that, in a condition when the separate chassis are maximally loaded, they can independently transmit the required coupling force without coupling via the load.

Alternatively, the front and rear chassis coupling means can be provided on the loading part, in particular on the front and rear side of the loading part. In such an embodiment, the chassis coupling means on the loading part are dimensioned such that, when the chassis parts are maximally loaded, they can transmit the required coupling force.

It is however preferred that front and rear chassis coupling means are provided on the loading part as well as on the axle set. Here, the chassis coupling means of the axle set can be dimensioned such that the chassis coupling means of the axle set can supply the force required for coupling when the two chassis each bear their own load and the chassis are coupled via the axle sets. Here, the chassis coupling means of the loading parts can, for instance, be designed such that they can supply the coupling force when the axle sets do not form a bridge between the loading parts and the chassis is empty, or when a load forming a bridge between the two loading parts is provided, for instance a 40'or 45' container.

In an elegant manner, the front chassis coupling means are displaceable and/or detachable with respect to the loading part. By thus arranging the front chassis coupling means such that they can be folded away or slid away, space can be made for receiving the rear part of a pulling vehicle when the chassis is coupled by its front part to a pulling vehicle.

Preferably, each chassis in coupled condition can independently bear load. In this manner, a 20' container can, for instance, be placed on the front and/or rear chassis. Naturally, also, a 40' or 50'container can be included.

What is achieved by arranging the axle set to be lockable with respect to the loading part at several positions relative to the driving direction, both when the chassis is independently connected to a pulling vehicle and when the chassis is connected to a pulling vehicle while rigidly coupled in random order to a similar chassis, is that the weight distribution and the driving properties can be optimally set. It is therefore preferred that in coupled condition, the axle sets can be coupled and locked under the chassis at different positions with respect to the driving direction. In an elegant manner, the axle sets can be provided closer to the middle of the coupled chassis so that the coupled sets of wheels form a bridge between the two loading parts.

Preferably, however, it is also possible to adjust at least one axle set such that it is clear of its own loading part and is locked to the other loading part. In this manner, the axles can be placed relatively far forward for the purpose of a favourable weight distribution when the chassis is coupled as rear chassis, while also under the front part of the loading part, sufficient receiving space can be made available for a pulling vehicle when the chassis is coupled as front chassis in front of another chassis, and also, at the front side, to a pulling vehicle.

By providing the loading surface with fastening means for securing the load, for instance twist locks, the chassis can be made suitable for container transport. It is, however, also possible to provide the loading surface with a fixed superstructure, for instance a loading body or loading container.

By further providing the axle set with fastening means for fastening the load, in particular fastening points designed as twist locks, a broader pitch between securing points can be realized by sliding the axle set relative to the loading part, so that even more flexibility is formed in transporting different sizes containers.

Through the provision of support legs which are movable or detachable relative to the set of wheels or the loading part, the adjustment of the set of wheels relative to the loading part can be simplified. Further, when the support legs are provided adjacent the front of the chassis, and a pulling vehicle is to drive under the front part of the loading part, the so-called neck of the chassis, space can be created for the pulling vehicle.

With the chassis designed such that they can be coupled with intermediate space between the loading surfaces, the length of the chassis in coupled condition can be varied relatively easily.

Preferably, the chassis in coupled condition are then adjustable between a first position, in which the loading surfaces are situated against each other, and at least one second position in which the loading surfaces are spaced apart by intermediate spaces. In this manner, when the chassis are each loaded with a 20' container, an intermediate space can for instance be created between the containers so that the front container is accessible for inspection by customs. For such a customs position, an intermediate space of approximately 2.5 feet is suitable. It is further possible, through the creation of such an intermediate space, to adjust the pitch between the securing points provided on the chassis parts to a position in which these are, for instance, 40', 42.5'or 45' apart.

Preferably, the front part of the loading part bearing the pulling vehicle coupling, the so-called neck, is, in upright direction relative to the road surface, of relatively thin design. In such a variant, for the purpose of the force transmission between chassis parts in coupled condition, the chassis coupling via the sets of wheels can be of relatively heavy design, and the chassis coupling via the loading parts can be of relatively light design.

The height of the loading surface from the road surface is preferably 1.11 meter, so that containers with a height of 8'6" (2,58 meters) as well as containers with a height of 9'6" (2.89 meters) can be transported without the 4.00 metres maximum height for a vehicle with load allowed in the Netherlands being exceeded.

Preferably, the vehicle height of the chassis is adjustable, for instance by means of a pneumatically, hydraulically or mechanically adjustable system. It is noted that in such a case, preferably, a pulling vehicle with relatively low tyres is used, so that the height of the coupling disc is sufficiently low for cooperation with a king pin provided below the neck.

What can be achieved by designing, with one or more sets of wheels, the mudguards to be height-adjustable relative to the loading surface, is that, when adjusting the set of wheels relative to the loading part, the free passage between the underside of the loading surface and the mudguard can be enlarged. The height of the chassis can then be chosen to be relatively low while the sets of wheels can still pass parts reaching downward relative to the loading surface, such as the underside of the twist locks.

The invention also relates to a trailer or semi-trailer comprising two rigidly coupled chassis. Further advantageous embodiments of the invention are represented in the following claims.

It is noted that the features separately elucidated hereinabove can already be advantageously used in a chassis, independently and/or in random combinations of two or more features, and can therefore, independently, be considered as invention.

The invention will be elucidated on the basis of an exemplary embodiment represented in a drawing. In the drawing:
Fig. 1a shows a schematic side view of a first embodiment of a chassis according to the invention;
Fig. 1b shows a top plan view of the chassis of Fig. 1a;
Fig. 1c shows a rear view of the chassis of Fig. 1a;
Fig. 2a shows a schematic side view of the chassis of Fig. 1 wherein the axle set is slid rearward relative to the loading part;
Fig. 2b shows a top plan view of the chassis of Fig. 2a;
Fig. 3a shows a schematic side-view of two chassis according to Fig. 1, in rigidly coupled condition;
Fig. 3b shows a top plan view of the chassis of Fig. 3a;
Fig. 4a shows a schematic side view of two chassis according to Fig. 2a in rigidly coupled condition;
Fig. 4b shows a top plan view of the rigidly coupled chassis of Fig. 4a;
Fig. 4c shows a cross-section of the coupling between the axle sets;
Fig. 4d shows a cross-section of the coupling between axle set and loading part;
Fig. 4e shows a cross-section of the coupling between loading part and loading part;
Fig. 5a shows a schematic side view of two chassis parts in coupled condition with the loading surfaces against each other;
Fig. 5b shows a schematic side view of the chassis of Fig. 5a in rigidly coupled condition with intermediate space between the loading surfaces 2;
Fig. 6 shows a schematic side-view of a detail of the wheels with adjustable mudguards;
Fig. 7a shows a schematic side view of two coupled chassis in an alternative elaboration; and
Fig. 7b shows a top plan view of Fig. 7a.

It is noted that the Figures are only schematic representations of a preferred embodiment of the invention and are intended as non-limitative exemplary embodiment. In the Figures, identical or corresponding parts are represented with the same reference numerals.

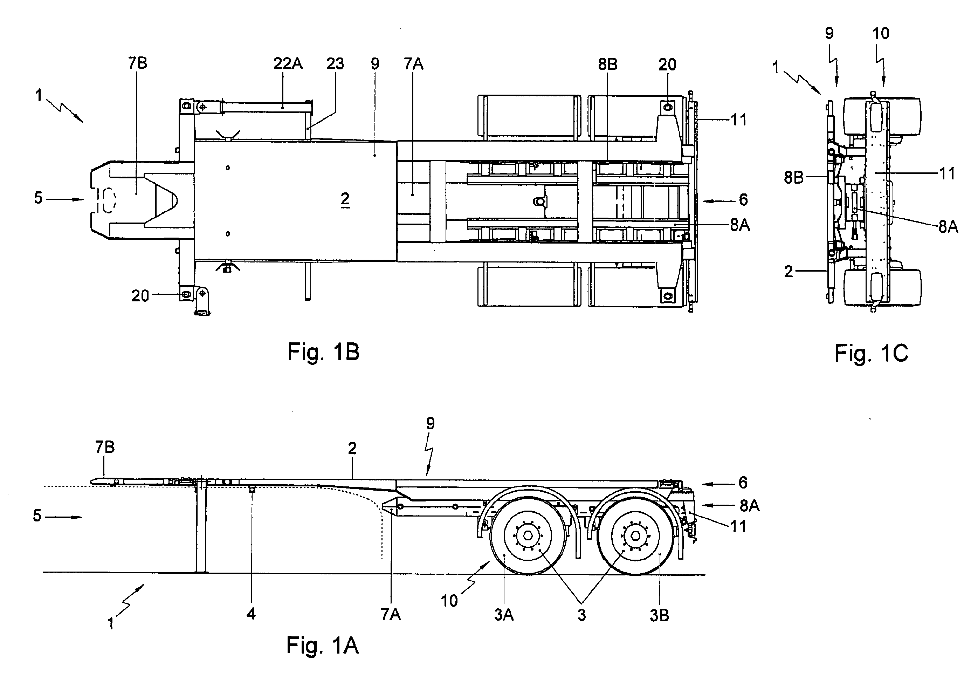

Figs. 1 - 4 show a chassis 1 provided with a loading surface 2 and at least one set of wheels 3. The chassis 1 further comprises a pulling vehicle coupling 4 for connection to a pulling vehicle (not represented). Here, the pulling vehicle coupling is designed as a standard kingpin. The chassis 1 is provided on the front side 5 and on the rear side 6 with mutually complementary chassis coupling means 7, 8, respectively. The chassis coupling means 8 on the rear side of the chassis 1 can be coupled to the chassis coupling means 7 on the front side 5 of a similar chassis 1, or at least of a chassis 1 which is provided with a complementary chassis coupling means.

The chassis coupling means 7, 8 are designed for rigid coupling of two chassis about an upright axis, i.e., in coupled condition the chassis are not pivotal about an axis extending substantially transversely to the loading surface 2.

The at least one set of wheels 3 is adjustable relative to the pulling vehicle coupling 4. When the chassis is independently connected to a pulling vehicle, or is connected to a pulling vehicle when rigidly coupled in random order, the weight distribution can be set by adjusting the set of wheels 3 relative to the pulling vehicle coupling 4. Through adjustment of the set of wheels 3 relative to the pulling vehicle coupling 4, thus, the ratio of the force applied via the pulling vehicle coupling 4 to the pulling vehicle, and the force applied via the set of wheels 3 to the road can be set.

In the embodiment represented in Figs. 1-4, this ratio can be set by sliding the axle of the set of wheels 3 in driving direction relative to the loading surface 2.

To increase the manoeuvrability, the set of wheels 3 is provided with tie rods and/or liftable axles.

The chassis 1 comprises two parts adjustable relative to each other in driving direction. The first part involves a loading part 9 comprising the loading part 2 and the pulling vehicle coupling 4. The second part involves an axle set 10 bearing the at least one set of wheels.

The axle set 10 is directly connected to the loading part 9, i.e. without intermediate frame. The axle set 10 is slidable along a rail 16 borne by the loading part 9. The axle set 10 can be locked in driving direction at several positions on the rail 16 by means of, for instance, a locking pin 17 which cooperates with holes 18 in the rails 16.

Here, the axle set 10 is provided with two sets of wheels 3A, 3B, of which the set of wheels 3A foremost in driving direction is provided with liftable axles and/or tie rods.

The chassis 1 is provided with a buffer beam 11 which is adjustable in driving direction relative to both the loading part 9 and the axle set 10. In this exemplary embodiment, the adjustability is effected by two telescopic tube parts that can be locked at different positions relative to each other by, for instance, a pin-hole connection. The outer tube part is fastened to the loading part while the inner tube part is fastened to the buffer beam. The buffer beam is also provided with lights and registration number.

The axle set 11 is provided, on the front side in driving direction, with front chassis coupling means 7a, and, on the rear side in driving direction, with rear chassis coupling means 8a.

Further, the loading part 9 is provided, on the front side in driving direction, with front chassis coupling means 7b, and is provided, on the rear side in driving direction, with rear chassis coupling means 8b.

The front chassis coupling means 7a of the axle set comprise a box girder 31 which can be received in a jacket 30 situated on the rear side of the axle set 10, the jacket forming the rear chassis coupling means 8a.

The chassis coupling means 7a, 8a can be secured relative to each other with the aid of locking pins 32 which reach through aligned openings 33 in box girder and jacket. Several locking positions are then conceivable.

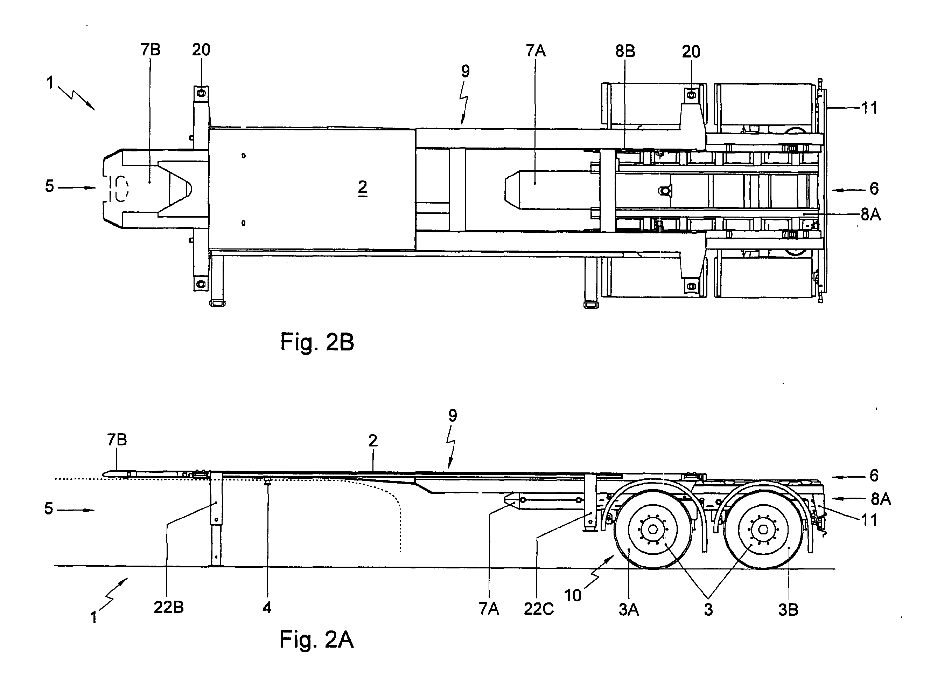

The chassis coupling means 7b on the front side of the loading part 9 are designed as a flat, box-shaped construction 12 which can be received in a corresponding recess 14 on the rear side of the loading part 9. Locking takes place by means of locks 13 provided on both sides of the recess 14 and which can reach into holes 15 provided in the sides of the box-shaped insertion part 12. The front chassis coupling means 7a on the axle set 10 are displaceable relative to the loading part 9. As a result, as is shown in Figs. 1 and 2, space can be created for receiving the rear part of a pulling vehicle under the part of the loading part 9 designed as neck. In Figs. 1 and 2, the rear side of the pulling vehicle is represented in broken lines.

The axle set 10 can be locked with respect to the loading part 9 at several positions relative to the driving direction. Figs. 2 shows that the axle set 10 of the chassis 1 is slid rearwards as independent unit relative to the driving direction.

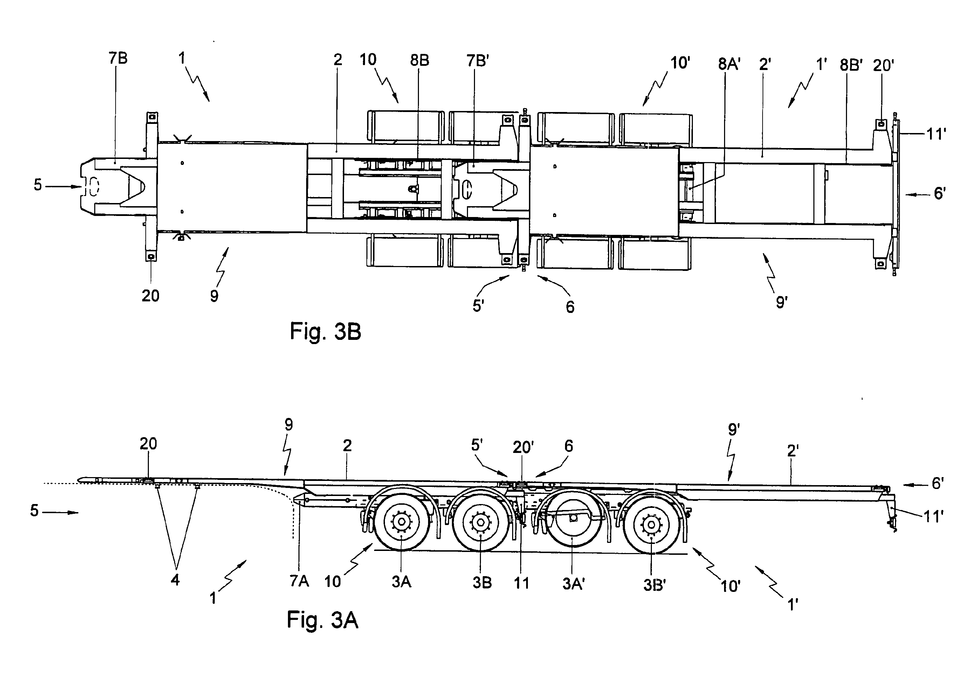

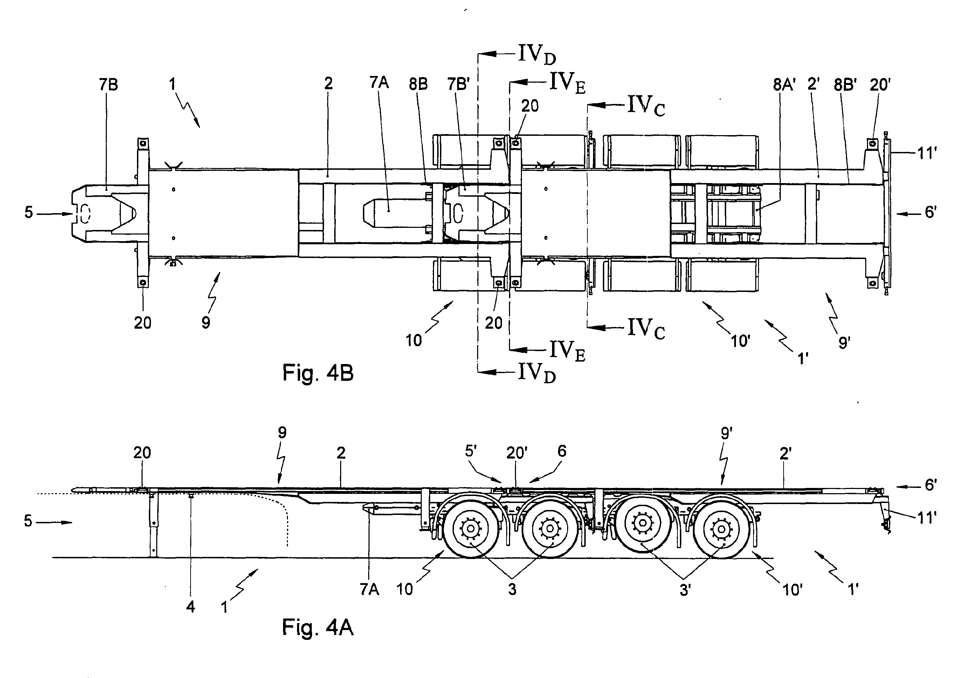

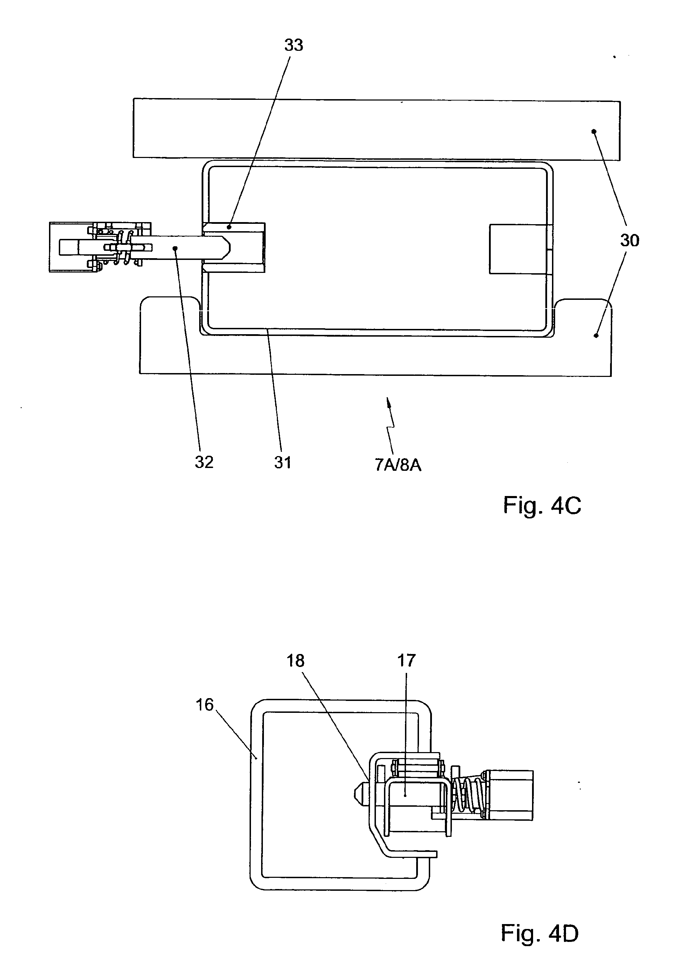

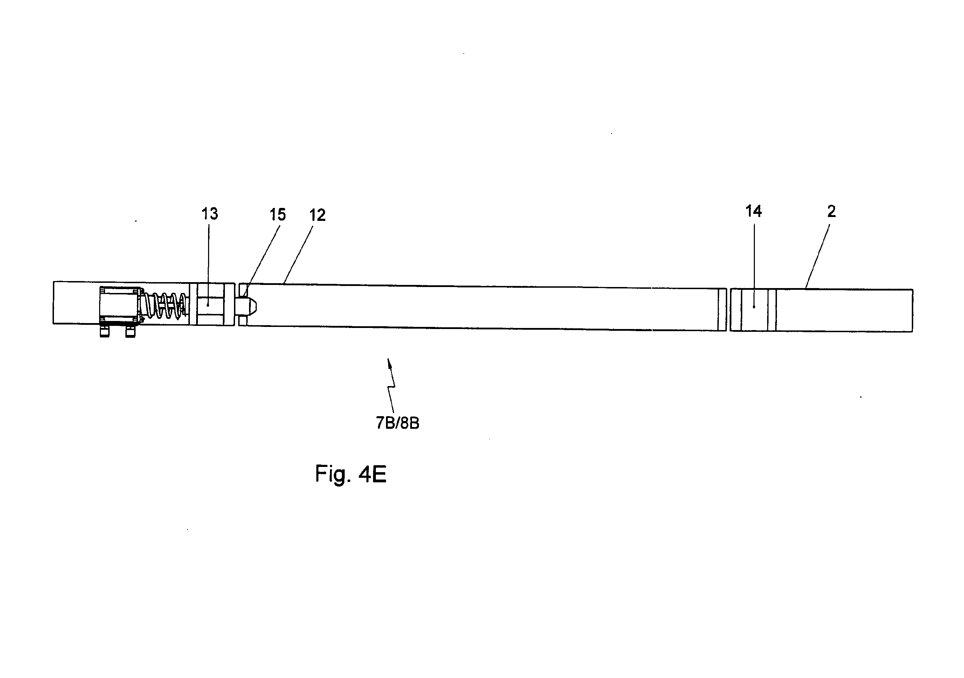

In Fig. 4 it is represented that the chassis 1 is rigidly coupled to a similar chassis 1', while Fig. 4 shows that the coupled sets of wheels are slid rearwards relative to the position represented in Fig. 3.

In Fig. 3, it is shown that the sets of wheels 10, 10', are coupled via the coupling means and are locked adjacent the middle of the coupled chassis. Therefore, the coupled axle sets form a bridge between the loading parts 9, 9', so that the chassis coupling 7b, 8b between the loading parts 9, 9' can be relieved. In the coupled position shown in Figs. 3 and 4, the axles of the front set of wheels 3 of the axle set 10' of the rear chassis 1' are lifted for improvement of the weight distribution of the coupled chassis. Here, the manoeuvrability is increased in that the axle sets 10, 10' are brought together and in that the front set of wheels of each axle set are of tie rod-steered design. Naturally, the rear sets of wheels can be just as well of tie rod-steered design.

For the purpose of coupling the chassis 1, 1', the axle set 10' of the rear chassis 1' is brought forward. It will be clear that the chassis can be coupled to the pulling vehicle in random order. In coupled condition, each chassis can independently bear load. If desired, the order of the chassis 1, 1' can be exchanged in a simple manner, so that the weight distribution and the driving properties can be improved. Further, the weight distribution can also be influenced by sliding the axle sets 10 relative to the loading parts 9, and the axles of the front sets of wheels 3 of the axle sets 10 can be lifted. If desired, both axles sets 10, 10' can be transferred to the rear chassis 1.

The loading surfaces 2, 2' of the chassis 1, 1' are provided with fastening means for directly fastening the load. In this exemplary embodiment, the fastening means are designed as so-called twist locks which are spaced apart by a centre distance of approximately 20', so that a 20' container can be received on the loading surface of each chassis. In coupled condition, the front and the rear fastening means are spaced apart by a centre distance of approximately 40', so that a 40' container can be transported on the coupled loading surfaces 2, 2'. If desired, further, additional locking points can be provided so that containers of other sizes too, for instance 30' containers, can be secured. Optionally, the axle set 10 is also provided with locking points so that even more flexibility can be achieved when receiving containers.

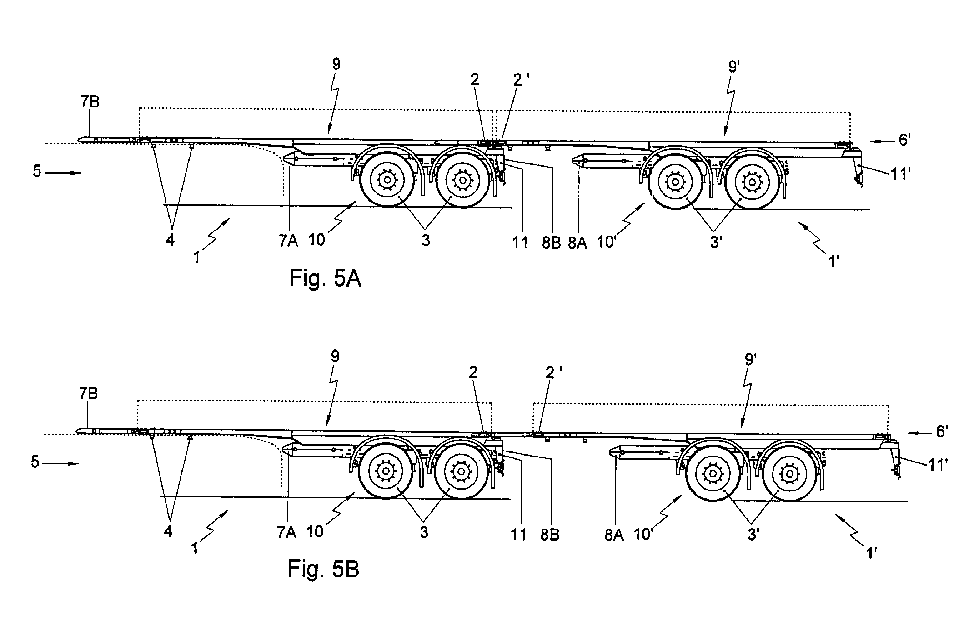

Figs. 5a and 5b show that the chassis 1, 1' can be coupled with intermediate space between the loading surfaces 2. The chassis 1, 1' are adjustable between a first position shown in Fig. 5a, in which the loading surfaces 2, 2' are situated against each other, and the second position, shown in Fig. 5b in which intermediate space is present between the loading surfaces 2, 2'. This latter position can for instance be used for realizing a customs position with which a temporary intermediate space is created between two 20' containers provided on the chassis 1, 1'. Further, the centre distance in driving direction between the front and rear locking points may optionally, in extended position, be set to approximately 42.5' or 45' for securing a 45' container.

Here, the starting height of the loading surface 2 is approximately 111 cm and can be set with the aid of bellows included in the suspension.

The chassis 1 is provided with support legs 22. The support legs 22A as shown in Fig. 1 are designed to be foldable and, in folded condition, rest on a support 23. Upon folding down, the support legs can also be folded outwards in sideways direction, so that the rear side of a pulling vehicle can be received between the support legs. In an alternative embodiment, the support leg 22B is telescopic and may be locked at several positions by a pin-hole connection or a rack. The alternative support leg 22B is slidable in driving direction and is fastened to the chassis via a guide 24. This is represented in Fig. 2.

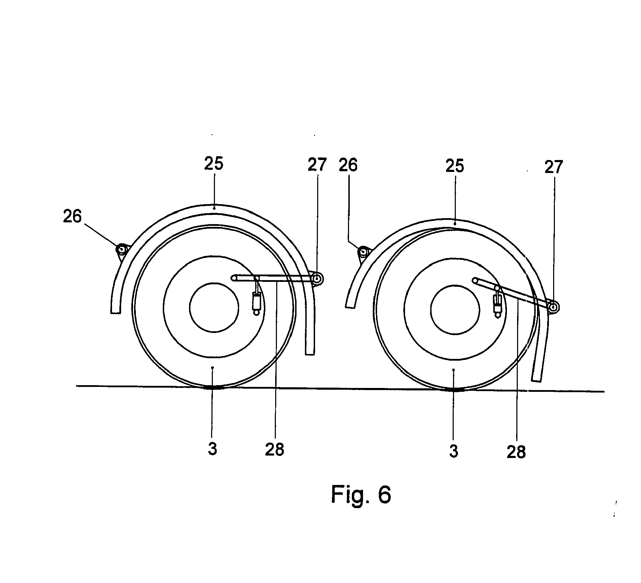

In Fig. 6 it is represented that the mudguard 25 is hinged to the chassis via the front mudguard tube 26.

Here, the rear mudguard tube 27 can for instance be fastened via a lever 28 to the axle set 10. As a result, the mudguard 25 can temporarily be placed very closely against the wheel 20 for enlarging the free intermediate space between the mudguard 25 and the underside of the loading surface 2 during sliding of the axle set 10.

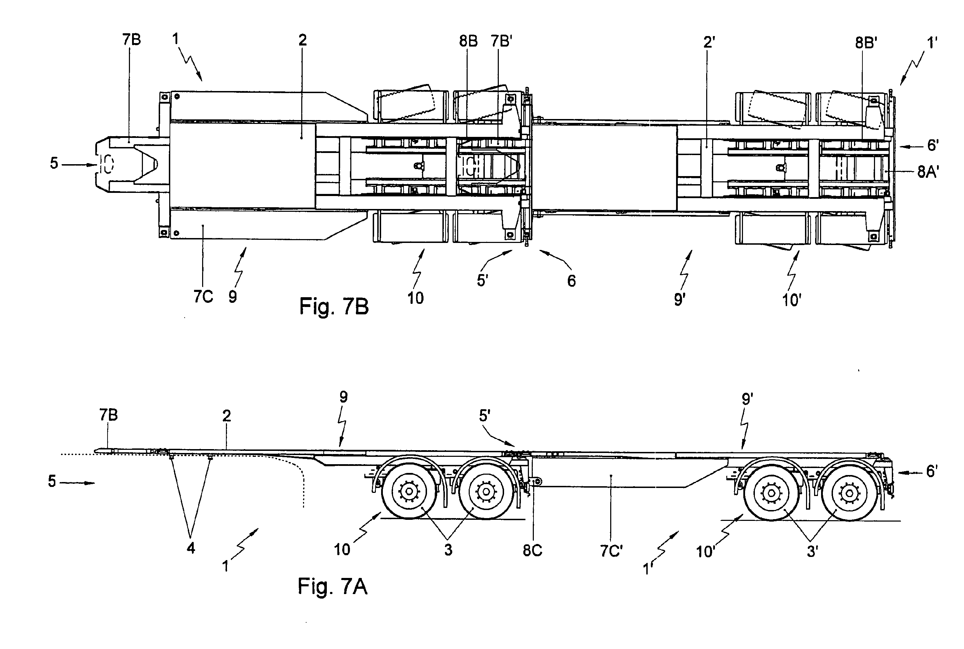

Fig. 7 shows an alternative embodiment wherein the chassis coupling means 7, 8 are designed as collapsible side pieces 7C on the front side of the chassis which can be secured with the aid of locking arms 8C borne by the rear side of the axle sets. In this embodiment, the axle set 10 is not slidable relative to the loading part 9, but the sets of wheels 3 are provided with force-steered axles.

For setting the weight distribution both in coupled and uncoupled condition, the king pin 4 is adjustable in driving direction relative to the loading surface 2.

The invention is not limited to the exemplary embodiments represented here. Many variants are possible within the framework of the invention as set forth in the following claims.

## Claims

1. A chassis, provided with a loading surface, at least one set of wheels and a pulling vehicle coupling for connection to a pulling vehicle, wherein on the front and rear side of the chassis mutually complementary chassis coupling means are provided for rigid coupling about an upright axle to a complementary coupling means of another chassis, while the at least one set of wheels is of force-steered design or is designed to be adjustable between several positions in driving direction with respect to the pulling vehicle coupling.

2. A chassis according to claim 1, wherein, both when the chassis is independently connected to a pulling vehicle and when it is connected to a pulling vehicle while rigidly coupled in random order to a similar chassis, through adjustment of the set of wheels relative to each other, the weight distribution can be set.

3. A chassis according to claim 1 or 2, comprising a loading part which comprises the loading surface and the pulling vehicle coupling and an axle set which comprises the at least one set of wheels.

4. A chassis according to claim 3, wherein the loading part and the axle set are adjustable relative to each other in driving direction.

5. A chassis according to claim 3 or 4, wherein a buffer beam is provided which is adjustable in driving direction relative to both the loading part and the axle set.

6. A chassis according to any one of the preceding claims, wherein the at least one set of wheels is adjustable, relative to the pulling vehicle coupling, between a first position situated closer to the rear side of the loading surface, and a second position situated closer to the front side of the loading surface.

7. A chassis according to any one of the preceding claims, wherein the chassis coupling means in coupled condition are pivotal about a horizontal axis which extends transversely to the driving direction.

8. A chassis according to any one of claims 3-7, wherein front and rear chassis coupling means are provided on the axle set, or wherein front and rear chassis coupling means are provided on the loading part.

9. A chassis according to any one of claims 3-7, wherein front and rear coupling means are provided both on the axle set and on the loading part.

10. A chassis according to any one of claims 3-9, wherein the front chassis coupling means are displaceable and/or detachable relative to the loading part.

11. A chassis according to any one of the preceding claims, wherein, in coupled condition with in random order to another chassis it can independently bear load.

12. A chassis according to any one of claims 3-11, wherein the axle set, both when the chassis is independently coupled to a pulling vehicle and when the chassis is connected to the pulling vehicle while rigidly coupled in random order to a similar chassis, can be locked with respect to the loading part at several positions relative to the driving direction.

13. A chassis according to any one of claims 3 - 12, wherein, in coupled condition to a similar chassis, the axle sets can be coupled and can be locked under the chassis at different positions relative to the driving direction.

14. A chassis according to any one of claims 3 - 13, wherein, in coupled condition to a similar chassis, the axle sets can be coupled and can be locked adjacent the middle of the coupled chassis in a manner such that the sets of wheels form a bridge between the loading parts.

15. A chassis according to any one of preceding claims 3 - 14, wherein, in coupled condition to a similar chassis, at least one axle set is removable from its own loading part and can be secured on the other loading part.

16. A chassis according to any one of claims 3 - 15, wherein, per loading part, several axle sets are provided.

17. A chassis according to any one of the preceding claims, wherein the axle set is provided with fastening means for direct coupling to the load, in particular twist locks.

18. A chassis according to any one of the preceding claims, wherein the pulling vehicle coupling is adjustable in driving direction, preferably a king pin lockable at several positions.

19. A chassis according to any one of the preceding claims, wherein at least one set of wheels is provided with a tie rod or self-tracking axle.

20. A chassis according to any one of the preceding claims, wherein at least one set of wheels is provided with a liftable axle.

21. A chassis according to any one of claims 3 - 20, wherein support legs are provided which are movably or detachably fastened to an axle set.

22. A chassis according to any one of claims 3 - 20, wherein support legs are provided which are movably or detachably fastened to the loading part.

23. A chassis according to any one of the preceding claims, wherein the chassis can be coupled via the chassis coupling means with intermediate space between the loading parts.

24. A chassis according to claim 23, wherein, via the chassis coupling means, the chassis are adjustable between a first position, in which the loading surfaces are situated against each other, and at least one further position in which the loading surfaces are spaced apart.

25. A chassis according to any one of the preceding claims, wherein the starting height of the loading surface is approximately 111 cm.

26. A chassis according to any one of the preceding claims, wherein the vehicle height of the loading part of the chassis is adjustable.

27. A chassis according to any one of the preceding claims, wherein the mudguards of one or more sets of wheels are height-adjustable relative to the loading surface.

28. A chassis according to any one of the preceding claims, wherein the loading part is provided with locking points for locking sea containers, in particular twist locks.

29. A chassis according to any one of the preceding claims, wherein the loading surface is provided with a fixed superstructure, in particular a loading body or loading container.

30. A chassis according to any one of the preceding claims, wherein the length of the loading surface is approximately 20'.

31. A semi-trailer or trailer comprising a chassis according to any one of the preceding claims which, via one of the chassis coupling means, is rigidly coupled to a corresponding chassis coupling means of another chassis.

32. A trailer or semi-trailer according to claim 31, wherein the other chassis is also a chassis according to any one of the preceding claims.
